Europäisches Patentamt

European Patent Office

Office européen des brevets

(11) Publication number: **0 026 898**
A2

# EUROPEAN PATENT APPLICATION

(21) Application number: 80105883.5

(22) Date of filing: 27.09.80

(51) Int. Cl.³: **G 01 N 21/21**, G 01 L 1/24, G 02 B 27/28

(30) Priority: 05.10.79 JP 128017/79

(43) Date of publication of application: 15.04.81
Bulletin 81/15

(84) Designated Contracting States: **BE CH DE FR GB IT LI NL SE**

(71) Applicant: **OLYMPUS OPTICAL CO., LTD.**,
43-2, 2-chome, Hatagaya Shibuya-ku, Tokyo (JP)

(72) Inventor: **Takeishi, Hiroyuku, 25-204, Green Heights 269-1 Michinobe, Kamagayashi Chiba-ken (JP)**
Inventor: **Hashiguchi, Toshihiko, 8-3-15, Seishin, Sagamihara-shi Kanagawa-ken (JP)**

(74) Representative: **Freischem, Werner, Dipl.-Ing. et al, Patentanwälte Dipl.-Ing. W. Freischem Dipl.-Ing. I. Freischem An Gross St. Martin 2, D-5000 Köln 1 (DE)**

(54) **Polariscope.**

(57) A polariscope comprises an elongate flexible sheath (12); a distal end section (14) fixed to one end of the sheath (12); a control section (13) fixed to the other end of the sheath (12); an elongate light guide (17) extending through the distal end section (14) and the sheath (12), also extending out of the control section (13) to be connected to a light source (15); an elongate image guide (18) extending through the distal end section (14), the sheath (12) and the control section (13) and having one end connected to an ocular section (19) in the control section (13) and the other end connected to an objective (20) in the distal end section (14); a first polarizer (24) which is rotatable about its center and faces an end of the light guide (17) in the distal end section (14); and a second polarizer (25) which is coaxial with the objective (20), parallel with the first polarizer (24), and faces the objective (20) in the distal end section (14). With this polariscope, a photoelasticity measurement of the stress on the invisible interior of an object (38) to be measured can be carried out correctly and simply.

- 1 -

## Polariscope

The present invention relates to a polariscope for observing photoelasticity of the interior of an object and analyzing its stress.

A photoelasticity measuring method has been used for a means of stress analysis of an object to be measured. However, this method is limited to stress measurements either on the external surface of the object or of its portion which is directly observed from the outside. A suitable polariscope has not, thus, been available for measurement of stress on the portion which cannot be observed from the outside, e.g., the interior of an engine or a pump or an atomic reactor.

The object of the present invention is to provide a polariscope which enables measurements of photoelasticity on objects to be measured which are not directly observed from the outside, especially inner portions which are bent, narrow, or far from the inlet.

A polariscope in accordance with the present invention comprises an elongate flexible sheath; a distal end section fixed to one end of the sheath; a control section fixed to the other end of the sheath; an elongate light guide extending through the distal end section and the sheath, extending out of the operation section, and having one end connected to a light source; an elongate image guide extending through the distal end section, the sheath and the control section, having one end optically connected to an ocular section disposed on the control section and having the other end connected to objective disposed in the distal end section; a first polarizer which is rotatable about its center and faces the other end of the light guide in the distal end section; and a second polarizer which is coaxial with the objective, parallel with the first polarizer and faces the objective.

In polariscope of such construction, a sheath is inserted in the object to be measured, and the other end of the light guide and image guide face a photoelastic film adhered to the place to be measured so that the stress may be measured through the ocular section disposed outside the object to be measured. Accordingly, the measurement of the stress of the part of the object to be measured may be easily and correctly performed as long as there is a path for guiding the sheath to the portion to be measured, even when such a path is intricately curved.

The present invention will be fully understood from the following detailed description with reference to the accompanying drawings, in which:

Fig. 1 is a longitudinal cross sectional view schematically showing the construction of a polariscope in accordance with one embodiment of the present invention;

Fig. 2 is a front view of the distal end section of the device of Fig. 1;

Fig. 3 is a longitudinal cross sectional view of the distal end section of the device of Fig. 1;

Fig. 4 is a front view showing a modification of the arrangement of the first and second polarizing disks disposed inside the distal end section of the polariscope of the present invention;

Fig. 5 is a longitudinal cross sectional view of the distal end section of a polariscope in accordance with another embodiment of the present invention;

Fig. 6 is a longitudinal cross sectional view of the distal end section of a polariscope in accordance with still another embodiment of the present invention;

Fig. 7 is a front view of Fig. 6; and

Fig. 8 is a cross sectional view along the line 8-8 of Fig. 6.

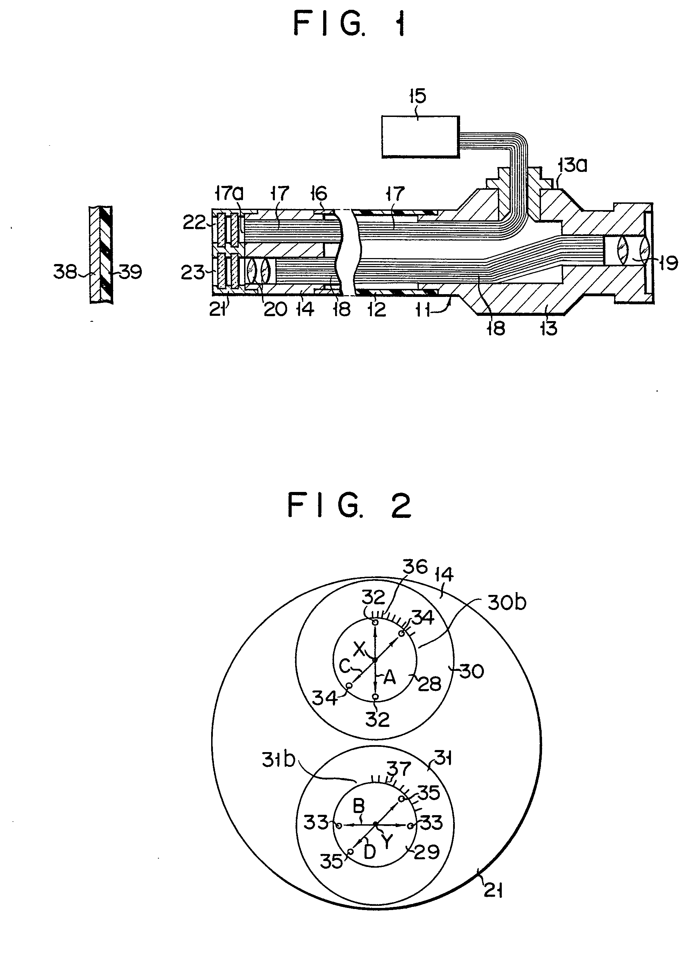

Figs. 1 to 3 show the first embodiment of the present invention.

As shown in Fig. 1, a polariscope comprises a polariscope main body 11 having a flexible sheath 12 which is an elongate tubular member, a control section 13 fixed to one end of the sheath 12, and a distal end section 14 fixed to the other end of the sheath 12; and a light source 15 disposed outside the main body 11. The other end of the sheath 12 and the proximal end of the distal end section 14 are connected by a bend section 16. The bend section 16 can be bent in an arbitrarily selected direction by operation wires (not shown) extending through the sheath 12, upon rotation of a knob (not shown) disposed on the control section 13, so that the distal end of the distal end section 14 may be oriented in any desired direction.

A light guide 17 which consists of a bundle optical fibers and has a circular cross section extends through the distal end section 14, the bend section 16 and the sheath 12, and also extends out of a lateral side 13a of the control section 13 to allow the extended end to be optically connected to the light source 15. The other end 17a of the light guide 17 is located on the rear end face of the distal end section 14.

An image guide 18, which consists of a bundle of optical fibers and has a circular cross section has one end coaxial with an ocular 19 disposed in the proximal end of the control section 13, and extends through the control section 13, the sheath 12, and the bend section 16 into the distal end section 14. The other end of the image guide 18 is coaxial with an objective 20 whose optical axis is parallel to the light guide 17 in the distal end section 14.

The construction of the polariscope as a whole has been described schematically. However, since the part that has been described in the same as that of a known industrial endoscope used for internal observation of machinery such as various equipment and reactors, the detailed description will be omitted.

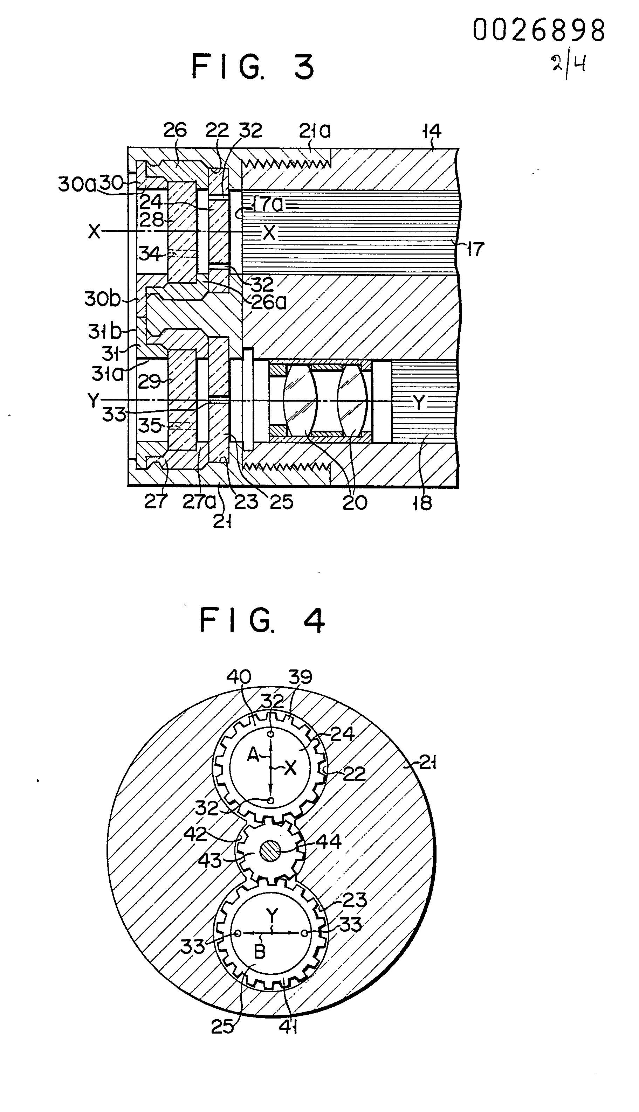

As is best shown in Fig. 3, a short cylindrical polarizer holding member 21 has a sleeve portion 21a which is detachably attached to the smaller outer diameter portion forming the forward end portion of the distal end section 14 by a connecting means such as screwing, snap fitting, or the like. Formed in the holding member 21 are axial cylindrical through holes 22, 23 which are coaxial with the other end 17a of the light guide 17 and the objective 20, respectively. First and second disk-shaped polarizers 24, 25 are received in the deepest parts of respective through holes 22, 23 in such a manner that the former is coaxial with the other end 17a of the light guide 17, and the optical axis of the latter aligns with that of the objective 20. The polarizers 24, 25 are rotatable about their own optical axes.

First and second annular press members 26 and 27 are further fixed into the through holes 22, 23 by a connecting means such as fitting or screwing so that they prevent, with inwardly extending flanges 26a, 27a, displacement of the first and second polarizers 24, 25 along the optical axes.

First and second disk-shaped quarter-wave plates 28, 29 are arranged in the first and second keeping members 26, 27 in such a manner that the plates 28, 29 are parallel to the first and second polarizers 24, 25, respectively, and their optical axes are in alignment with the optical axes of the corresponding polarizers 24, 25. Both of the quarter-wave plates 28, 29 are rotatable about their own optical axes. The common optical axis of the first polarizer 24 and the first quarter-wave plate 28 is represented by X-X, and the common optical axis of the second polarizer 25 and the second quarter-wave plate 29 is represented by Y-Y.

Third and fourth keeping members 30, 31 each comprise sleeves 30a and 31a, and collars 30b, 31b, and are connected to the inner periphery of the first and second keeping members 26, 27 by a connecting means such as screwing, snap fitting or the like. The first and second quarter-wave plates 28, 29 are each clamped by the inwardly extending flanges 26a, 27a of the first and second keeping members 26, 27 and the sleeves 30a, 31a of the third and fourth keeping members 30, 31, so that the plates 28, 29 may not be displaced along the optical axes X-X and Y-Y, respectively.

The first and second polarizers 24, 25 have a pair of angle indicating holes 32 and a pair of angle indicating holes 33, which are symmetrical with respect to the optical axes X-X and Y-Y, respectively. The holes 32, 33 are so arranged that the imaginary straight line A passing through the centers of the holes 32 and the imaginary straight line B passing through the centers of the holes 33 are parallel to the directions of polarization of the polarizers 24, 25, respectively.

A pair of angle indicating holes 34 and a pair of angle indicating holes 35 are formed in the first and second quarter-wave plates 28, 29, respectively, such that the holes 34, 35 are also symmetrical with respect to the corresponding optical axes X-X, Y-Y. The imaginary straight line C passing through the centers of holes 32 is parallel to the directions of polarization of the first quarter-wave plate 28, and the imaginary straight line D passing through the centers of the holes 35 is parallel to the directions of polarization of the second quarter-wave plate 29. Since the distances of the holes 32 and 34 from the optical axis X-X are equal, and the distances of the holes 33 and 35 from the optical axis Y-Y are also equal, the rotation of the first and second quarter-wave plates 28, 29 allows for aligning the holes 32, 33 with the holes 34, 35. Thus, with a pin or a thin rod passing through the holes 34, 32 and 35, 33, the first and second polarizers 24, 25 can be rotated through a desired angle. When the pin or the thin rod is inserted only in the holes 34, 35, the first and second quarter-wave plates 28, 29 alone may be rotated. For correct positioning of the polarizers 24, 25 and the quarter-wave plates 28, 29, angular scales 36, 37 (partially shown in Fig. 2) may be provided on the inner edge portions of the collars 30b, 31b of the third and fourth keeping members 30, 31 (Fig. 2).

The mode of operation will now be described.

By means of a pin or a thin rod, both polarizers are set so that the straight lines A, B of the first and second polarizers 24, 25 are perpendicular to each other. In Fig. 2, the straight line A is vertically oriented, while the straight line B is oriented horizontally. The straight lines C, D of the first and second quarter-wave plates 28, 29 are rotated through 45° in the opposite directions from the straight lines A, B, respectively. In Fig. 2, the straight line C is rotated through 45° from the straight line A in the clockwise direction, and the straight line D is rotated from the straight line B through an angle of 45° in the counterclockwise direction.

The sheath 12 is inserted from the holding member 21 into an object 38 to be measured (Fig. 1), while the object 38 is illuminated with light through the light guide 17 from the light source 15. If needed, the bend section 16 is bent by means of the knob, and the quarter-wave plates 28, 29 are brought to face a photoelastic film or coating 39 (Fig. 1) of a high polymeric material such as an epoxy resin, which is attached to the inner surface of the object 38 to be measured.

When white light or monochromatic light is guided from the light source 15 by the light guide 17, the light is circularly polarized after the light has passed through the first polarizer 24 and the first quarter-wave plate 28 and illuminates the photoelastic film 39. The light transmitted through the film 39 is reflected on the interface between the photoelastic film 39 and the inner surface of the object 38 to be measured and is doubly refracted. The doubly refracted lights enter the second quarter-wave plate 29 and polarizer again after passing through the second quarter-wave plate 29 and the second polarizer 25. Two kinds of polarized lights reach the ocular section 19 through the image guide 18 to be observed as a figure exhibiting a stripe pattern. The stress on the object 36 to be measured may be found by analyzing the figure.

In the first embodiment, the first and second polarizers 24, 25 may be rotated independently of each other so that the angle between the straight lines A, B, i.e., the directions of polarization of the polarizers 24, 25 may be arbitrarily changed for obtaining the stress between the adjacent stripes in the figure, thereby enabling more precise stress measurement to be made. This stress measurement method is known as the isochromatic line observation method.

With the first embodiment, the first and second quarter-wave plates 28, 29 are easily removed after the third and fourth keeping members 30, 31 are simply detached. Thus, the first embodiment is advantageous in that it readily carries out the isoclinic line observation as in the other embodiments.

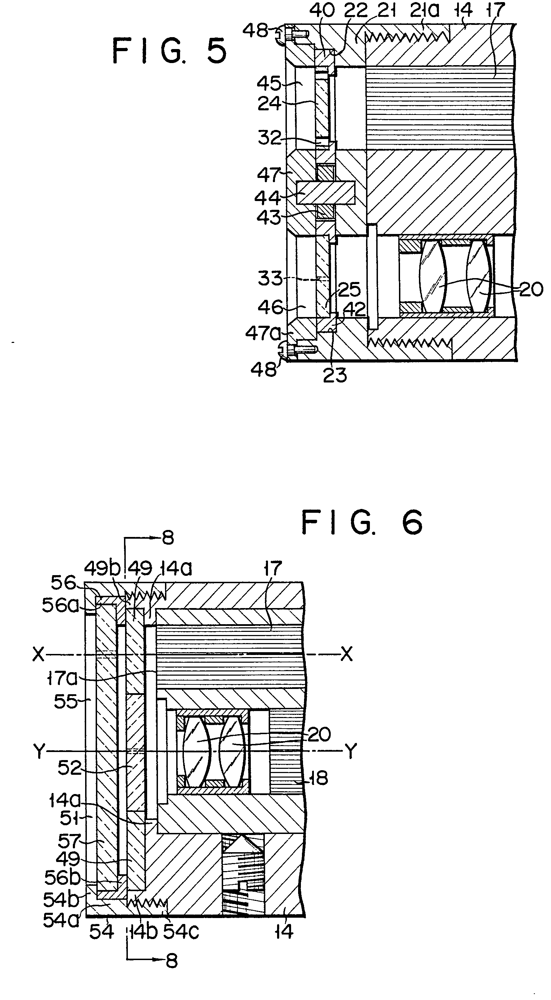

Figs. 4 and 5 show the second embodiment of the present invention. External gears 40, 41 with the same number of teeth and same modules are formed on the outer peripheries of the first and second polarizers 24, 25, respectively. The outer diameters of the gears 40, 41 are substantially equal to the inner diameters of the cylindrical through holes 22, 23, and are rotatable in the through holes 22, 23.

A blind hole 42 communicating at its diametrically opposite portions with the through holes 22, 23 is formed at the center of the polarizer holding member 21. In the hole 42 is arranged an intermediate gear 43 in engagement with the gears 40, 41 and having the same module as the gears 40, 41. The intermediate gear 43 has a central shaft 44 by which it is axially supported on the holding member 21.

The second embodiment does not include the quarter-wave plates. The first and second polarizers 24, 25 are held so as not to move along their optical axes by a keeping member 47 having cylindrical through holes 45, 46 which are aligned with the through holes 22, 23. The keeping member 47 may be mounted on the holding member 21 by attaching a flange 47a formed on the keeping member 47 to the front end of the holding member 21 with screws 48. The first and second polarizers 24, 25 are previously assembled so that the straight lines A, B, i.e., the directions of polarization of the polarizers 24, 25 are perpendicular to each other. When one of the polarizers 24, 25 is rotated, the other polarizer is rotated in the same direction through the same angle via the intermediate gear 43, so that the imaginary straight lines A, B remain perpendicular to each other.

The second embodiment is utilized for the isoclinic line observation since the quarter-wave plates are not used and the directions of polarization of the polarizers 24, 25 are always perpendicular to each other. Even when the quarter-wave plates are included as in the first embodiment, the isoclinic line observation may still be carried out if the directions of polarization of the quarter-wave plates are the same as those of the corresponding polarizers 24, 25.

The quarter-wave plates may be arranged in front of the polarizers 24, 25 as in the first embodiment for an isochromatic line observation.

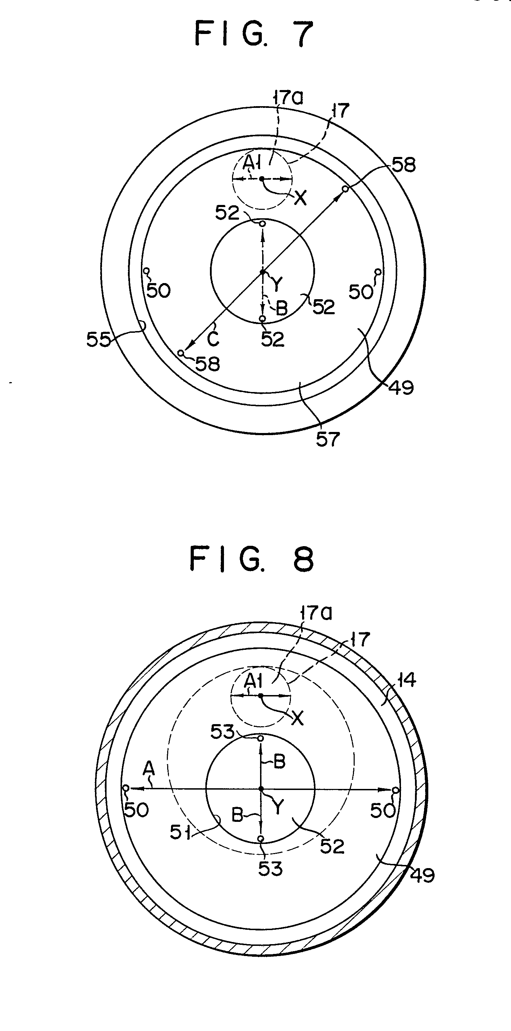

Figs. 6 to 8 show the third embodiment of the present invention. In this embodiment, the objective is provided in, and coaxially with the distal end section 14 of the polariscope main body. A first disk-shaped polarizer 49 is received by a flange 14a and a rim 14b formed on the front end of the distal end section 14 so as to be rotatable about the optical axis Y-Y. The disk-shaped polarizer 49 is positioned a predetermined distance from the objective 20 and the front end 17a of the light guide 17. A pair of angle indicating holes 50 penetrate the periphery of the first polarizer 49 in a symmetrical relationship with respect to the optical axis Y-Y. The imaginary straight line A passing through the holes 50 is parallel to the directions of polarization of the polarizer 49. A circular hole 51 having the optical axis Y-Y as its center is formed at the center of the first polarizer 49. A second disk-shaped polarizer 52 of the same diameter as the circular hole 51 is fixedly fitted in the hole 51 by means of an adhesive or the like such that an imaginary straight line B parallel to the directions of polarization of the polarizer 52 is perpendicular to the straight line A. With this construction, the imaginary straight line A1 which is parallel to the straight line A, i.e., the directions of polarization of the polarizer 49 and perpendicularly intersecting the optical axis X-X is always perpendicular to the straight line B. A pair of angle indicating marks 53 which are symmetrical with respect to the optical axis Y-Y and through which the straight line B passes may be formed in the second polarizer 52.

A holding member 54 comprises a ring portion 54a; a flange 54b defining a circular opening 55 at one end of the ring portion 54a; and a sleeve 54c formed on the other end of the ring portion 54a. The keeping member 56 comprises a ring portion 56a for fitting at its outer periphery with the inner peripheral surface of the ring portion 54a of the holding member 54, and a flange 56b formed on one end of the ring portion 56a. A disk-shaped quarter-wave plate 57 is rotatably held by the ring portion 56a of the keeping member 56 and the outer periphery of the flange 56b. The axis of rotation of the plate 57 is the optical axis Y-Y.

When the keeping member 56 receiving the quarter-wave plate 57 is fitted in the holding member 54, and the sleeve 54c of the holding member 54 is connected to the front end of the distal end section 14 by a means such as screwing, snap fitting or the like, the first polarizer 49 is held between the flange 14a of the distal end section 14 and the flange 56b of the keeping member 56; the quarter-wave plate 57 is held between the flange 56b of the keeping member 56 and the flange 54b of the holding member 54 so that its axial movement is prevented. The quarter-wave plate 57 is so arranged that its rotational axis coincides with the optical axis Y-Y. A pair of angle indicating holes 58 are formed on the outer edge portion of the quarter-wave plate 57 such that they are symmetrical with respect to the optical axis Y-Y. The imaginary straight line C passing through the centers of the holes 58 is parallel to the directions of the polarization of the plate 57.

When the quarter-wave plate 57 is so positioned that the straight line C makes an angle of 45° with the straight lines A and B, the polariscope of the third embodiment may be similarly used for isochromatic line observation as in the case of the first embodiment.

The third embodiment has the advantage that only one quarter-wave plate has to be provided, making it unnecessary to adjust each quarter-wave plate as is the case with the other embodiments, thereby simplifying the construction and operation of the polariscope.

Claims:

1. A polariscope comprising an elongate flexible sheath having two ends, a distal end section fixed to one of said two ends of said sheath, a control section fixed to the other end of said sheath, an elongate light guide extending through said distal end section and said sheath and having one end disposed in said distal end section and the other end extending out of said control section, a light source connected by the other end of said light guide, an elongate image guide extending through said distal end section, said sheath and said control section and having two ends, an objective aligned with one of said two ends of said image guide in said distal end section and having an optical axis, an ocular section disposed in said control section and optically connected to the other end of said image guide characeried by comprising a first polarizer facing said one end of said light guide and rotatable about an axis along said optical axis of said objective, and a second polarizer disposed coaxially with, and facing said objective in said distal end section.

2. A polariscope as claimed in claim 1, characterized in that said second polarizer is rotatable about said optical axis of said objective.

3. A polariscope as claimed in claim 2, characterized in that said first and second polarizers rotate independently of each other.

4. A polariscope as claimed in claim 2, characterized in that said first and second polarizers are provided with gears of the same number of teeth and the same module, an intermediate gear is interposed between said gears for connection between the gears, and said first and second polarizers are so arranged that their directions of polarization are perpendicular to each other.

5. A polariscope as claimed in claim 1, characterized in that a hole of the substantially same size as said second polarizer is formed in said first polarizer, and said second polarizer is fitted into said hole with directions of polarization of said first and second polarizers intersecting perpendicularly with each other.

6. A polariscope as claimed in any one of the preceding claims, characterized in that a pair of angle indicating marks are respectively formed in each of said first and second polarizers, said pair of marks defining an imaginary straight line parallel to the directions of polarization of each of said first and second polarizers.

7. A polariscope as claimed in any one of claims 1 to 5, characterized in that, at said distal end section, quarter-wave plate means is disposed in parallel to said first and second polarizers and opposite to said one end of said light with respect to said polarizers.

8. A polariscope as claimed in claim 7, characterized in that said quarter-wave means comprises a first quarter-wave plate facing said first polarizer, and rotatable coaxially with said first polarizer; and a second quarter-wave plate facing said second polarizer and rotatable coaxially with said second polarizer.

9. A polariscope as claimed in claim 8, characterized in that a pair of first angle indicating holes are formed in each of said first polarizer and said first quarter-wave plate and defining an imaginary straight line parallel to the directions of polarization of each of said first polarizer and said first quarter-wave plate, said first holes of said first polarizer being adapted to align with said hole of said first quarter-wave plate; and a pair of second angle indicating holes are formed in each of said second polarizer and said second quarter-wave plate and defining an imaginary straight line parallel to the directions of polarization of each of said second polarizer and said second quarter-wave plate, said second holes of said second polarizer being adapted to align with said hole of said second quarter-wave plate.

10. A polariscope as claimed in claim 7, characterized in that said quarter-wave plate means is a quarter-wave plate facing said first polarizer and said second polarizer and having a rotational axis parallel to the rotational axis of said first polarizer.

# F I G. 1

# F I G. 2

# FIG. 3

# FIG. 4

FIG. 5

FIG. 6

# FIG. 7

# FIG. 8